(19) Europäisches Patentamt
European Patent Office
Office européen des brevets

(11) **EP 4 763 905 A1**

# (12) EUROPEAN PATENT APPLICATION

(43) Date of publication:
**24.06.2026 Bulletin 2026/26**

(21) Application number: **25202323.9**

(22) Date of filing: **15.09.2025**

(51) International Patent Classification (IPC):
***C08K 5/00*** *(2006.01)* ***C08K 5/52*** *(2006.01)*
***C08K 5/5313*** *(2006.01)*

(52) Cooperative Patent Classification (CPC):
(C-Sets available)
**C08K 5/5313; C08K 5/0066; C08K 5/5205;**
C08K 2201/014 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.12.2024 CN 202411875706**

(71) Applicants:
- **Shanghai Kingfa Sci. & Tech. DVPT. Co., Ltd.**
  **Qingpu, Shanghai 201714 (CN)**
- **Kingfa Sci. & Tech. Co., Ltd.**
  **Guangzhou, Guangdong 510663 (CN)**
- **Liaoning Kingfa Biomaterial Co., Ltd.**
  **Panjin City, Liaoning Province 124000 (CN)**

(72) Inventors:
- **LI, Jide**
  **Guangzhou, 510663 (CN)**
- **CHEN, Pingxu**
  **Guangzhou, 510663 (CN)**
- **YE, Nanbiao**
  **Guangzhou, 510663 (CN)**
- **JING, Xinke**
  **Guangzhou, 510663 (CN)**
- **LIU, Zhen**
  **Guangzhou, 510663 (CN)**
- **TAN, Xiaobin**
  **Guangzhou, 510663 (CN)**
- **TANG, Ming**
  **Guangzhou, 510663 (CN)**

(74) Representative: **Meyer, Thorsten**
**Meyer Patentanwaltskanzlei**
**Pfarrer-Schultes-Weg 14**
**89077 Ulm (DE)**

## (54) POLYMER ADDITIVE, AND PREPARATION METHOD AND USE THEREOF

(57) The present disclosure belongs to the technical field of flame retardants and discloses a polymer additive, a preparation method and a use thereof. The polymer additive comprises aluminum diethylphosphinate having a structural formula shown in formula (I) and aluminum ethylbutylphosphinate having a structural formula shown in formula (II); the polymer additive satisfies a relationship of $0.92 \leq \Delta H \leq 1.06$, wherein $\Delta H$ is a dual enthalpy ratio and defined by Equation (1): $\Delta H = H_2/H_1$, and the polymer additive also satisfies following relationships: $130\ °C \leq T_1 \leq 155\ °C$, and $165\ °C \leq T_2 \leq 185\ °C$. The polymer additive has better thermal stability, thereby making it more difficult to decompose during the processing process and thus reducing its corrosion to metal processing parts of metal production equipment.

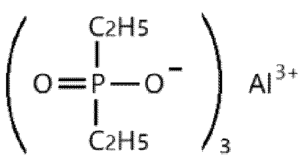
(I)

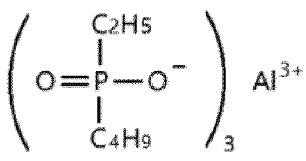
(II)

EP 4 763 905 A1

(52) Cooperative Patent Classification (CPC): (Cont.)

C-Sets
**C08K 5/5313, C08L 67/02;**
**C08K 5/5313, C08L 77/02**

## Description

### TECHNICAL FIELD

The present disclosure relates to the technical field of flame retardants, and specifically relates to a polymer additive, a preparation method and a use thereof.

### BACKGROUND

Aluminum diethylphosphinate (ADP) is a halogen-free, green and environmentally friendly flame retardant. It is a white powder in appearance, and is insoluble in water and most organic solvents, but soluble in strong acid solutions and strong alkali solutions. It has the characteristics of high flame retardancy, high thermal stability, low smoke, a small particle size, a low specific gravity, good dispersibility and compatibility. As an efficient, green and environmentally friendly halogen-free flame retardant, aluminum diethylphosphinate is widely used in inflaming retarding of thermoplastics, such as polyphthalamide (PPA), polyamide 66 (PA66) and polybutylene terephthalate (PBT), as well as fibers and textiles.

A composite system comprising aluminum diethylphosphinate is widely used in the field of halogen-free flame-retardant glass fiber reinforced engineering plastics, such as, aluminum diethylphosphinate and melamine polyphosphate (MPP) system, aluminum diethylphosphinate and melamine cyanuric acid (MCA) system, and aluminum diethylphosphinate and aluminum phosphite system. These systems have the advantages of high flame retardancy, high temperature resistance, and low loss of resin matrix performance, and are widely used.

Although conventional aluminum diethylphosphinate has a very high heat-resistance temperature and 1 wt.% of thermal weight loss of ADP occurs at a temperature of over 350 °C (nitrogen atmosphere, 20 °C/min), as required in the specifications of most products on the market, it still severely corrodes screws in the process of inflaming retarding modification of engineering plastics, such as PBT, polyamide (PA), especially special engineering plastics, such as high-temperature nylon. Therefore, aluminum diethylphosphinate is required to synergistically work with some additives to mitigate this corrosion.

At present, mechanisms on thermal degradation and flame retardation of aluminum diethylphosphinate have been studied in relevant literatures. It is found that, during the decomposition process of aluminum diethylphosphinate, acidic substances, such as diethylphosphinic acid, will be generated and volatilized into the gas phase, then fully pyrolyzed into phosphorus atoms, and further formed into a phosphorus-containing free radical scavenger, showing a gas phase flame retardant effect. Chinese patent CN107189098A discloses an additive for polymers, specifically, aluminum diethylphosphinate in combination with aluminum phosphite and/or aluminum alkylphosphinate, which can greatly reduce the corrosion to screws and have less impact on the colors of bulk polymers. Chinese patent CN110407869A discloses a flame retardant, i.e., monoaluminum 3,3,3-trifluoropropylphosphinate. Specifically, the monoaluminum 3,3,3-trifluoropropylphosphinate is combined with aluminum diethylphosphinate to reduce the corrosion of aluminum diethylphosphinate to screws, during the process of extrusion and modification.

Though aluminum diethylphosphinate was combined with other components to achieve a reduced corrosiveness in the above solutions, it still brings serious corrosion problems during the process of screw extrusion. Therefore, how to provide aluminum diethylphosphinate with lower corrosiveness has become a technical problem that needs to be solved urgently.

### SUMMARY OF THE DISCLOSURE

In view of the above problems in the prior art, an objective of the present disclosure is to provide a polymer additive, which has good heat resistance and thermal stability, and its corrosiveness to metal parts in a metal production equipment is significantly reduced during the process of flame retardant modification.

In order to achieve the above objective, the present disclosure provides the following technical solution.

In a first aspect, the present disclosure provides a polymer additive, comprising aluminum diethylphosphinate having a structural formula shown in formula (I) and aluminum ethylbutylphosphinate having a structural formula shown in formula (II);

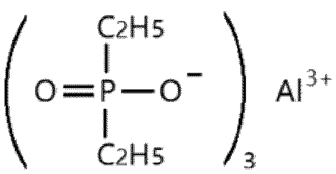

(I)

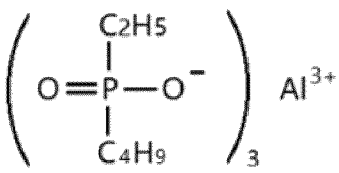

(II)

wherein the polymer additive satisfies a relationship of $0.92 \leq \Delta H \leq 1.06$, and the $\Delta H$ is a dual enthalpy ratio and defined by Equation (1); and the polymer additive further satisfies following relationships: $130\ °C \leq T_1 \leq 155\ °C$, and $165\ °C \leq T_2 \leq 185\ °C$;

$$\Delta H = H_2/H_1 \qquad (1)$$

the $H_2$, $H_1$, $T_1$, $T_2$ are obtained by differential scanning calorimetry (DSC) comprising the following steps:

in nitrogen atmosphere, heating the polymer additive from room temperature to a maximum temperature of 300 °C at a heating rate of 20 °C/min, holding the maximum temperature for 3 minutes, and then cooling the polymer additive from the maximum temperature to room temperature at a rate of 20 °C/min to obtain a cooling curve of the polymer additive; holding the room temperature for 3 minutes, and then reheating the polymer additive from room temperature to the maximum temperature of 300 °C at a heating rate of 20 °C/min to obtain a second heating curve of the polymer additive;

$H_1$ represents a peak area under an exothermic peak formed between an onset temperature and an endset temperature of the exothermic peak on the cooling curve, and $T_1$ is a peak temperature of the exothermic peak on the cooling curve;

$H_2$ represents a peak area under an endothermic peak formed between an onset temperature and an endset temperature of the endothermic peak on the second heating curve, and $T_2$ is a peak temperature of the endothermic peak on the second heating curve.

Differential scanning calorimetry (DSC) is used for characterization of melting process and crystallization process of a polymer, and can reflect the relationship between the structure and crystallization of the polymer. A structural change of the polymer directly determines the melting or crystallization behavior of the polymer in a DSC curve during the heating or cooling process. The physical meaning actually reflected by the dual enthalpy ratio, $\Delta H$, is a relationship between the difficulty for destruction of crystal structure/crystallization of the polymer and the polymer structure. Crystallization behavior and crystal melting behavior are closely related to structural characteristics. When there are great differences in the structures of polymers, the arrangement of molecular chains and crystallization behavior of the polymers, as well as the destruction behavior of crystal structures, are also greatly changed, which is manifested as certain fluctuations in the ratio of the melting enthalpy to the crystallization enthalpy (i.e., the dual enthalpy ratio, $\Delta H$) in the DSC curves. Such fluctuations of the dual enthalpy ratio reflect the structural characteristics of the polymers and the macroscopic change of the thermal stability of the polymers caused by the dual enthalpy ratio.

The inventors found by researches that, when the polymer additive has a specific dual enthalpy ratio and specific peak temperatures $T_1$ and $T_2$, it will have a specific structure, which makes its crystal structure and morphology more difficult to be destroyed during the heating process. Further, the polymer additive has better thermal stability, thereby reducing the decomposition of the polymer additive during the processing process and significantly reducing the corrosion to the metal processing parts, such as screws, of metal production equipment.

Specifically, in some embodiments, the peak areas $H_1$, $H_2$, and peak temperatures $T_1$, $T_2$ can be obtained by marking peaks and calculating the integration of the peak areas through the existing methods in the art, for example, by using the software provided in the DSC device. Specifically, in some embodiments, when differential scanning calorimetry is adopted for testing, a weight of a testing sample for the polymer additive can be $10 \pm 0.5$ mg.

Specifically, in some embodiments, the peak areas $H_1$, $H_2$ and/or the peak temperatures $T_1$, $T_2$ can be integrated and/or marked for multiple times and then averaged, such as, integrated and/or marked for once, twice, 3 times, 4 times, or 5 times. More specifically, from the perspective of saving operations and maintaining data reproducibility and reliability, the peak areas $H_1$, $H_2$ and/or the peak temperatures $T_1$, $T_2$ can be tested for 2-4 times and then averaged.

In some embodiments, the polymer additive comprises 97.01 wt.% - 98.99 wt.% of aluminum diethylphosphinate and 1.01 wt.% - 2.99 wt.% of aluminum ethylbutylphosphinate. More specifically, a content of the aluminum diethylphosphinate in the polymer additive can be any one of 97.30 wt.%, 97.50 wt.%, 97.70 wt.%, 97.90 wt.%, 98.10 wt.%, 98.30 wt.%, 98.50 wt.%, 98.70 wt.%, and 98.90 wt.%, or an interval range defined by any two of the above values, such as 97.01 wt.% - 97.70 wt.%, 97.30 wt.% - 97.90 wt.%, 97.01 wt.% - 98.30 wt.%, 98.10 wt.% - 98.50 wt.%, 98.90 wt.% - 98.99 wt.%, 98.50 wt.% - 98.90 wt.%, but is not limited thereto. More specifically, a content of the aluminum ethylbutylphosphinate in the polymer additive can be any one of 1.20 wt.%, 1.40 wt.%, 1.60 wt.%, 1.80 wt.%, 2.00 wt.%, 2.20 wt.%, 2.40 wt.%, 2.60 wt.%, 2.80 wt.%, and 2.90 wt.%, or an interval range defined by any two of the above values, such as 1.01 wt.% - 2.50 wt.%, 1.01 wt.% - 2.20 wt.%, 1.10 wt.% - 2.20 wt.%, 1.40 wt.% - 2.20 wt.%, 1.80 wt.% - 2.60 wt.%, but is not limited thereto.

In some embodiments, the polymer additive satisfies the relationship of $0.93 \leq \Delta H \leq 1.05$; the polymer additive further satisfies the following relationships: $132\ °C \leq T_1 \leq 153\ °C$, and $170\ °C \leq T_2 \leq 183\ °C$.

More specifically, the dual enthalpy ratio, ΔH, in the present disclosure can be any one of 0.93, 0.94, 0.96, 0.98, 1.00, 1.02, and 1.04, or an interval range defined by any two of the above values, such as 0.95-1.02, 0.96-1.00, and is not limited thereto.

In the present disclosure, the $T_1$ may be any one of 130 °C, 132 °C, 134 °C, 136 °C, 138 °C, 140°C, 142 °C, 144 °C, 146 °C, 148 °C, 150 °C, 152 °C, 154 °C, and 155 °C, or an interval range defined by any two of the above values, such as 134 °C to 142 °C, 140 °C to 154 °C, but is not limited thereto.

In the present disclosure, the $T_2$ may be any one of 165 °C, 167 °C, 169 °C, 171 °C, 173 °C, 175 °C, 177 °C, 179 °C, 181 °C, 183 °C, and 185 °C, or an interval range defined by any two of the above values, such as 167 °C to 175 °C, 171 °C to 177 °C, but is not limited thereto.

More preferably, the polymer additive satisfies the relationship of $0.92 \leq \Delta H \leq 0.93$, and satisfies the following relationships: 146 °C ≤ $T_1$ ≤ 148 °C, and 178 °C ≤ $T_2$ ≤ 180 °C. When the dual enthalpy ratio, ΔH, T1 and T2 are all fallen in the above preferred ranges, the polymer additive has better thermal stability and causes less corrosion to the screws during the extrusion and modification processes.

In some embodiments, a water content of the polymer additive is in a range of from 0.05 wt.% to 0.40 wt.%.

In some embodiments, a bulk density of the polymer additive is in a range of from 150 g/L to 800 g/L; preferably, the bulk density of the polymer additive is in a range of from 350 g/L to 750 g/L.

In some embodiments, water solubility of the polymer additive is in a range of from 0.01 g/L to 5 g/L.

In a second aspect, the present disclosure provides a method for preparing a polymer additive, comprising the following steps:

(a) introducing a water-soluble hypophosphite or hypophosphorous acid and an initiator into a jet loop reaction system to react with an olefin, so that 2.00 to 2.05 molecules of olefins are added to each phosphorus (P) atom in the water-soluble hypophosphite or hypophosphorous acid itself, thereby obtaining an intermediate aqueous solution containing a diethylphosphinate;

(b) subjecting the intermediate aqueous solution and a water-soluble aluminum salt to a metathesis reaction to obtain the polymer additive.

In the above embodiment, in the step (a), a pressure of the olefin in the jet loop reaction system is in a range of from 0.3 MPa to 3.0 MPa.

In the above embodiment, in the step (a), a reaction temperature in the jet loop reaction system is in a range of from 70 °C to 150 °C.

More preferably, in some embodiments, the pressure of the olefin in the jet loop reaction system is in a range of from 1.2 MPa to 1.6 MPa; the reaction temperature in the jet loop reaction system is in a range of from 100 °C to 110 °C.

In the above embodiment, in the step (b), a weight percentage of the diethylphosphinate in the intermediate aqueous solution is in a range of from 20 wt.% to 25wt.%.

In the above embodiment, a weight percentage of the water-soluble aluminum salt in a water-soluble aluminum salt solution is in a range of from 20 wt.% to 25 wt.%.

In the above embodiment, in the step (b), a pH of the metathesis reaction is in a range of from 3.0 to 3.1.

In the above embodiment, in the step (b), a temperature of the metathesis reaction is in a range of from 40 °C to 45 °C.

In the above embodiment, in the step (b), a molar ratio of the diethylphosphinate to an aluminum ion in the water-soluble aluminum salt is 3: (1-1.01).

In the above embodiment, the jet loop reaction system comprises at least one jet loop reactor and 0 to 3 aging reactors; alternatively, the jet loop reaction system may be an intermittent jet loop reactor, without an aging reactor. When the jet loop reaction system comprises a plurality of continuous jet loop reactors, the plurality of jet loop reactors are each connected in parallel and/or in series with the aging reactors.

In the above embodiment, the jet loop reactor may be a jet loop reactor with a stirring assembly, or a jet loop reactor without a stirring assembly; the aging reactor may be a high-pressure reactor, a jet loop reactor, a plate tower, a bubbling tower, or a falling film reaction tower.

In the above embodiment, when the intermediate aqueous solution is mixed with the water-soluble aluminum salt, the intermediate aqueous solution may be dripped into the water-soluble aluminum salt; alternatively, the intermediate aqueous solution and the water-soluble aluminum salt are simultaneously dripped into a reactor.

In a third aspect, the present disclosure provides another method for preparing a polymer additive, comprising the following steps:

(a) under nitrogen protection, allowing a water-soluble hypophosphite or hypophosphorous acid to react with an olefin in the presence of an initiator at a temperature of 90 °C to 100 °C and holding the temperature, so that 2.00 to 2.05 molecules of olefins are added to each phosphorus atom in the water-soluble hypophosphite or hypophosphorous

acid itself, thereby obtaining an intermediate aqueous solution containing a diethylphosphinate;

(b) under stirring, mixing the intermediate aqueous solution with a water-soluble aluminum salt to perform a reaction at a temperature of less than or equal to 15 °C, then raising the temperature to 70-95 °C and holding the temperature to obtain the polymer additive.

In the above embodiment, in the step a), holding the temperature is performed in two substeps, wherein in a first substep, a first holding time is in a range of from 3.5 h to 4.5 h and the initiator is continuously added; then in a second substep, a second holding time is in a range of from 0.5 h to 1.5 h.

In the above embodiment, in the step (b), the intermediate aqueous solution and the water-soluble aluminum salt are mixed and reacted at a temperature of 0-10 °C.

In the above embodiment, in the step (b), the pH of the reaction is in a range of from 3.0 to 7.0.

In the above embodiment, in the step (b), the water-soluble aluminum salt is dripped to the intermediate aqueous solution under stirring for mixing and reaction, a dripping time is in a range of from 1.5 h to 2.5 h.

In the above embodiment, in the step (b), the temperature is raised at a heating rate of 2-15 °C/h.

In the above embodiment, in the step (b), a holding time for holding the temperature is in a range of from 5 to 30 min.

In the above embodiment, in the step (b), a molar ratio of the diethylphosphinate to an aluminum ion in the water-soluble aluminum salt is 3: (1-1.01).

In a fourth aspect, the present disclosure provides yet another method for preparing a polymer additive, comprising the following steps:

(a) under nitrogen protection, allowing a hypophosphorous acid to react with an olefin in the presence of an initiator at a temperature of 90 °C to 100 °C and holding the temperature, so that 2.00 to 2.05 molecules of olefins are added to each phosphorus atom in the hypophosphorous acid itself, thereby obtaining an intermediate aqueous solution containing a diethylphosphinic acid;

(b) preparing an aluminum hydroxide gel;

(c) dripping the intermediate aqueous solution into the aluminum hydroxide gel for reaction, raising the temperature to 90-120 °C, holding the temperature for 0.1-5 h, thereby obtaining the polymer additive.

In the above embodiment, in the step (a), holding the temperature is performed in two substeps, wherein in a first substep, a first holding time is in a range of from 2.5 h to 3.5 h and the initiator is continuously added; then in a second substep, a second holding time is in a range of from 1.5 h to 2.5 h.

In the above embodiment, in the course of holding the temperature in the step (a), a part of reaction materials in the reactor are introduced into a venturi ejector and fully mixed with ethylene introduced into the venturi ejector, and then enter the reactor after external circulation.

In the above embodiment, in the step (b), a sodium hydroxide aqueous solution is dripped into an aluminum sulfate aqueous solution to obtain the aluminum hydroxide gel.

In the above embodiment, in the step (b), the sodium hydroxide aqueous solution is dripped into the aluminum sulfate aqueous solution at a temperature of 10-20 °C.

In the above embodiment, in the step (c), the temperature is raised at a heating rate of 2-25 °C/h.

In the above embodiment, in the step (c), a molar ratio of the diethylphosphinic acid to an aluminum ion in the aluminum hydroxide gel is 3: (1-1.01).

In some embodiments, the initiator is one or more selected from the group consisting of organic peroxides, inorganic peroxides, and azo compounds. More specifically, the inorganic peroxide may be one or more selected from the group consisting of sodium persulfate, ammonium persulfate, and potassium persulfate. The organic peroxide may be one or more selected from the group consisting of benzoic acid peroxide, lauric acid peroxide, di-tert-butyl peroxide, carbonate peroxide, acetic acid peroxide, tert-butyl peroxyisobutyrate, and tert-butyl peroxypivalate; the azo compound may be azobisisobutyronitrile and/or azobisisoheptanenitrile.

In some embodiments, the olefin may be at least one selected from the group consisting of ethylene, propylene, 1-butene, 2-butene, 1-pentene, 1-hexene, and 1-octene.

In some embodiments, the water-soluble hypophosphite may be potassium hypophosphite and/or sodium hypophosphite.

In some embodiments, the water-soluble aluminum salt may be one or more selected from the group consisting of aluminum oxide, aluminum hydroxide, aluminum peroxide, aluminum sulfate, aluminum hydrogen sulfate, hydrated aluminum sulfate, aluminum persulfate, aluminum phosphate, and aluminum phosphite.

Further, the present disclosure provides a use of the polymer additive in reducing corrosion to metal production equipment. In particular, the present disclosure provides the use of the polymer additive in reducing corrosion to metal parts, such as screws of metal production equipment.

Furthermore, the present disclosure provides a use of the polymer additive as a reactive or non-reactive flame retardant for at least one selected from the group consisting of a polymer, a varnish, a foaming coating, wood and other cellulose-containing products; or a use of the polymer additive in preparation of a flame-retardant polymer molding material or a flame-retardant polymer molding; or a use of the polymer additive for imparting flame retardancy to a polyester fabric, and/or a pure cellulose fabric, and/or a blended cellulose fabric by impregnation.

In some embodiments, the polymer additive is used together with a synergist; the synergist is one or more selected from the group consisting of melamine phosphate, di(melamine) phosphate, penta(melamine) triphosphate, tri(melamine) diphosphate, tetra(melamine) triphosphate, hexa(melamine) pentaphosphate, melamine diphosphate, melamine tetraphosphate, melamine pyrophosphate, melamine polyphosphate, melam polyphosphate, melem polyphosphate, and melon polyphosphate; or, the synergist is a melamine condensation product, such as melam, melem, and/or melon; or, the synergist is one or more selected from the group consisting of an oligoester of tris(2-hydroxyethyl) isocyanurate and aromatic polycarboxylic acid, benzoguanamine, tris(2-hydroxyethyl) isocyanurate, allantoin, glycoluril, melamine, melamine cyanurate, urea cyanurate, dicyandiamide, and guanidine; or, the synergist is a nitrogen-containing phosphate having a formula of $(NH_4)_yH3\text{-}yPO_4$ or $(NH_4PO_3)_z$, wherein y is 1-3 and z is 1-10000; or, the synergist is aluminum phosphite, and/or aluminum pyrophosphite; or, the synergist is one or more selected from the group consisting of zinc borate, zinc carbonate, zinc stannate, basic zinc stannate, zinc phosphate, zinc oxide, zinc hydroxide, tin oxide hydrate, basic zinc silicate, magnesium hydroxide, hydrotalcite, and magnesium carbonate; or, the synergist is one or more selected from the group consisting of ethylphosphonate, butylphosphonate, *n*-butylphosphonate, *sec*-butylphosphonate, and hexylphosphonate.

Further, the polymer additive is used together with another additive, wherein the another additive is at least one selected from the group consisting of an antioxidant, an UV stabilizer, a gamma ray stabilizer, a hydrolysis stabilizer, an antistatic agent, an emulsifier, a nucleating agent, a softener, a processing aid, an impact modifier, a dye, and a pigment.

Further, 0.0001 wt.% - 99.7999 wt.% of the polymer additive, 0.1 wt.% - 40 wt.% of the synergist and 0.1 wt.% - 40 wt. % of the another additive are used.

In a fifth aspect, the present disclosure provides a flame retardant thermoplastic or thermosetting polymer composite material, comprising: 0.5 wt.% - 45 wt.% of the polymer additive, 0.5 wt.% - 95 wt.% of a thermoplastic or thermosetting polymer or a mixture thereof, 0 - 55 wt.% of a synergist, and 0 - 55 wt.% of a filler or a reinforced material.

In some embodiments, the thermoplastic or thermosetting polymer is one or more selected from the group consisting of a polyester, a polyamide, a thermoplastic elastomer, a thermoplastic polyurethane, a thermoplastic polyester elastomer, a styrenic polymer, a polyketone, a polyolefin, and a polyacrylate.

In some embodiments, the flame retardant thermoplastic or thermosetting polymer composite material may be a flame retardant thermoplastic or thermosetting polymer molding material, a flame retardant thermoplastic or thermosetting polymer molding, a flame retardant thermoplastic or thermosetting polymer film, a flame retardant thermoplastic or thermosetting polymer filament, or a flame retardant thermoplastic or thermosetting polymer fiber.

In some embodiments, the polyolefin may be a mono-olefin polymer and/or a diene polymer, such as polypropylene, polyisobutylene, poly-1-butene, poly-4-methyl-1-pentene, polyisoprene or polybutadiene; alternatively, the polyolefin may be a polymer of a cyclic olefin, such as cyclopentene or norbornene. Specifically, the polyolefin may be polyethylene (optionally crosslinked), such as high-density polyethylene (HDPE), high-density and high-molecular-weight polyethylene (HDPE-HMW), high-density and ultra-high-molecular-weight polyethylene (HDPE-UHMW), medium-density polyethylene (MDPE), low-density polyethylene (LDPE), linear low-density polyethylene (LLDPE), very low-density polyethylene (VLDPE), and mixtures thereof.

The polyolefin also may be a copolymer of a mono-olefin and a diene, or a copolymer of a mono-olefin and/or a diene with another vinyl monomer, for example an ethylene-propylene copolymer, a copolymer of linear low-density polyethylene (LLDPE) and low-density polyethylene (LDPE), a propylene-1-butene copolymer, a propylene-isobutylene copolymer, an ethylene-1-butene copolymer, an ethylene-hexene copolymer, an ethylene-methylpentene copolymer, an ethylene-heptene copolymer, an ethylene-octene copolymer, a propylene-butadiene copolymer, an isobutylene-isoprene copolymer, an ethylene-alkyl acrylate copolymer, an ethylene-alkyl methacrylate copolymer, an ethylene-vinyl acetate copolymer and a copolymer thereof with carbon monoxide, an ethylene-acrylic acid copolymer and a salt thereof (an ionomer), and a terpolymer of ethylene, propylene and a diene (such as, hexadiene, dicyclopentadiene or ethylidene norbornene). Furthermore, the polyolefin may also be a mixture of the fore-mentioned polymers or copolymers with one another, for example, polypropylene/an ethylene-propylene copolymer, LDPE/an ethylene-vinyl acetate copolymer, LDPE/an ethylene-acrylic acid copolymer, LLDPE/an ethylene-vinyl acetate copolymer, LLDPE/an ethylene-acrylic acid copolymer, and an alternating or statistically constructed polyalkylene-carbon monoxide copolymer; alternatively, the polyolefin may also be a mixture of the fore-mentioned polymers or copolymers with other polymers (such as, a polyamide).

In some embodiments, the styrenic polymer may be a copolymer of styrene or $\alpha$-methylstyrene with a diene or an acrylic derivative, such as a styrene-butadiene copolymer, a styrene-acrylonitrile copolymer, a styrene-alkyl methacrylate copolymer, a styrene-butadiene-alkyl acrylate copolymer, a styrene-butadiene-alkyl methacrylate copolymer, a styrene-maleic anhydride copolymer, and a styrene-acrylonitrile-methyl acrylate copolymer. In addition, the styrenic polymer may be a high-impact-strength mixture of a styrene copolymer and another polymer (such as a polyacrylate, a diene polymer or an ethylene-propylene-diene terpolymer); and the styrenic polymer may also be a block copolymer of styrene, such as a styrene-butadiene-styrene block copolymer, a styrene-isoprene-styrene block copolymer, a styrene-ethylene/butylene-styrene block copolymer or a styrene-ethylene/ propylene-styrene block copolymer.

In some embodiments, the styrenic polymer may be a graft copolymer of styrene or α-methylstyrene, or a mixture thereof. For example, the styrenic polymer may be a graft copolymer of styrene onto polybutadiene; a graft copolymer of styrene onto a polybutadiene-styrene copolymer or a polybutadiene-acrylonitrile copolymer; a graft copolymer of styrene and acrylonitrile (or methacrylonitrile) onto polybutadiene; a graft copolymer of styrene, acrylonitrile and methyl methacrylate onto polybutadiene; a graft copolymer of styrene and maleic anhydride onto polybutadiene; a graft copolymer of styrene, acrylonitrile and maleic anhydride or maleimide onto polybutadiene; a graft copolymer of styrene and maleimide onto polybutadiene; a graft copolymer of styrene and alkyl acrylate or alkyl methacrylate onto polybutadiene; a graft copolymer of styrene and acrylonitrile onto an ethylene-propylene-diene terpolymer; a graft copolymer of styrene and acrylonitrile onto a polyalkyl acrylate or a polyalkyl methacrylate; a graft copolymer of styrene and acrylonitrile onto an acrylate-butadiene copolymer; acrylonitrile-butadiene-styrene (ABS) copolymer, methyl methacrylate-butadiene-styrene (MBS) copolymer, acrylonitrile-styrene-acrylate (ASA) copolymer, or acrylonitrile-ethylene-styrene (AES) copolymer.

In some embodiments, the polyamide may be (i) a polyamide or copolyamide derived froman diamine and a dicarboxylic acid and/or (ii) a polyamide or copolyamide derived from an aminocarboxylic acid and a corresponding lactam, such as polyamide 6 (polycaprolactam, PA6), polyamide 66 (poly(hexamethylene adipamide), PA66), polyamide 46 (poly(tetramethylene adipamide), PA46). Alternatively, the polyamide may be an aromatic polyamide derived from meta-xylene, a diamine and adipic acid. Alternatively, the polyamide may be a polyamide prepared from hexamethylenediamine, isophthalic acid and/or terephthalic acid and optionally an elastomer serving as a modifier, such as, poly(hexamethylene isophthalamide), poly(hexamethylene terephthalamide), poly(2,4,4-trimethylhexamethylene terephthalamide), or poly(m-phenylene isophthalamide). Alternatively, the polyamide may be a block copolymer of a polyamide with a polyolefin, an olefin copolymer, an ionomer or a chemically bonded or grafted elastomer; or a block copolymer of a polyamide with a polyether, such as polyethylene glycol, polypropylene glycol or polybutylene glycol.

In some embodiments, the polyester may be a polyester derived from a dicarboxylic acid and a diol and/or a polyester derived from a hydroxycarboxylic acid or a corresponding lactone, such as polyethylene terephthalate, polybutylene terephthalate, poly-1,4-dihydroxymethylcyclohexane terephthalate, and polyhydroxybenzoate. Alternatively, the polyester may be a poly(ether ester) block co-polymer derived from a polyether having a hydroxyl end group. Alternatively, the polyester may be a polyester modified with polycarbonate or a methyl methacrylate-butadiene-styrene (MBS) copolymer.

In some embodiments, the filler or reinforced material may be (i) an oxygen-containing silicon compound;(ii) a metal compound, wherein the metal is a chemical element found in Group IIA of the periodic table; specifically, a magnesium compound, such as magnesium oxide, magnesium hydroxide, hydrotalcite, dihydrotalcite, magnesium carbonate or magnesium calcium carbonate; or a calcium compound, such as calcium hydroxide, calcium oxide, hydrocalumite; (iii) an aluminum compound, such as aluminum oxide, aluminum hydroxide, boehmite, gibbsite or aluminum phosphate; and/or (iv) red phosphorus, a zinc compound, or a glass fiber.

Compared with the prior art, the present disclosure has the following beneficial effects.

The present disclosure provides a polymer additive, wherein a dual enthalpy ratio (ΔH), $T_1$ (a peak temperature of the exothermic peak on the cooling curve) and $T_2$ (a peak temperature of the endothermic peak on the second heating curve) of the polymer additive are all defined in specific ranges respectively, so that the polymer additive has a specific crystal structure and specific morphology. Further, the polymer additive has better thermal stability, thereby making it more difficult to decompose during the processing process and thus reducing its corrosion to metal processing parts of metal production equipment.

## DETAILED DESCRIPTION

The present disclosure is further described in conjunction with specific examples. These examples do not limit the present disclosure in any form. Unless otherwise specified, reagents, methods and equipment used in the present disclosure are all conventional one(s) in the art.

Raw materials used in the examples and comparative examples were described as follows:

Sodium hypophosphite monohydrate, commercially available;
Sodium persulfate, commercially available;
Aluminum sulfate octadecahydrate, commercially available.

Glass fiber, Type: ECS10-03-568H, purchased from China Jushi Co., Ltd., China.

Melamine polyphosphate, Type: BUDIT3141, purchased from BASF Aktiengesellschaft, Germany.

Base resin 1: Polyamide 66 (PA66), Type: EPR24, purchased from Henan Shenma Nylon Chemical Co., Ltd., China.

Base resin 2: Polyamide 6 (PA6), Type: M2000, purchased from Guangdong Hengshen Meida New Materials Co., Ltd., China.

Base resin 3: Polybutylene terephthalate (PBT), Type: GX121, purchased from Sinopec Yizheng Chemical Fiber Co., Ltd., China.

Unless otherwise specified, all components or ingredients used in the parallel examples and comparative examples are identical, and commercially available.

Example 1

(1) Preparation of an intermediate aqueous solution containing sodium diethylphosphinate, specific preparation steps were as following.

(i) A sodium hypophosphite monohydrate aqueous solution (a weight percentage of the sodium hypophosphite in the sodium hypophosphite monohydrate aqueous solution was 35 wt.%), an initiator, i.e., a sodium persulfate aqueous solution (a weight percentage of the sodium persulfate in the sodium persulfate aqueous solution was 20 wt.%) and ethylene were introduced into a first jet loop reactor (JLR) (1000L) to perform a continuous reaction, wherein in the first jet loop reactor, a pressure of the ethylene was controlled to be 1.6MPa and a temperature was controlled to be 105 °C. After the above materials in the first jet loop reactor completed the continuous reaction, they were transferred into a second jet loop reactor (2000L) to continue the continuous reaction. Simultaneously, the initiator and ethylene were supplemented to the second jet loop reactor. And in the second jet loop reactor, a pressure of the ethylene was controlled to be 1.2MPa, a temperature was controlled to be 100 °C, and a space velocity for discharging all materials from the jet loop reactor system was selected to be 0.2/h;

(ii) After the above materials in the second jet loop reactor completed the reaction, they were further transferred into two parallel aging reactors (5000L), respectively. The initiator and ethylene were further supplemented into the two aging reactors, simultaneously. In each of the two aging reactors, a pressure of the ethylene was 1.0 MPa and a temperature was 95 °C.

(iii) A feeding rate of the sodium hypophosphite monohydrate aqueous solution was 300 kg/h, and a total feeding rate of the sodium persulfate aqueous solution was 23 kg/h. The sodium persulfate aqueous solution was distributed to the first jet loop reactor, the second jet loop reactor and the two aging reactors according to a mass ratio of 3:1:0.3:0.3. The ethylene was introduced into the reactors via regulating valves, so that its speed and pressure were maintained. The pressure and the temperature in each reactor were also maintained. After the materials in the aging reactors were aged, the ethylene pressure would no longer decrease and the intermediate aqueous solution containing sodium diethylphosphinate was obtained.

(2) Preparation of a polymer additive

The intermediate aqueous solution containing sodium diethylphosphinate prepared in the step (1) was diluted with water, until a weight percentage of the sodium diethylphosphinate in the intermediate aqueous solution was 20 wt.%. Then, 500 kg of a diluted solution was taken, heated to 40 °C, and dripped into 308.4 kg of an aluminium sulfate octadecahydrate aqueous solution (a weight percentage of aluminium sulfate octadecahydrate in the aluminium sulfate octadecahydrate aqueous solution was 25 wt.%) with a pH of 3.0-3.1 to perform a metathesis reaction (During the reaction, the pH was 3.0-3.1, and the reaction temperature was maintained at 40 °C). The dripping time was 120 minutes. After the dripping was completed, a resulting mixture was cooled and filtered in sequence. A resulting filter cake was washed for 3 times with water in an amount of 3 times the weight of the filter cake, and then dried at 120 °C to a constant weight, thereby obtaining the polymer additive.

Example 2

(1) Preparation of an intermediate aqueous solution containing sodium diethylphosphinate, the specific preparation steps were as follows.

1) 479.6 kg of a sodium hypophosphite monohydrate aqueous solution (the weight percentage of the sodium hypophosphite in the sodium hypophosphite monohydrate aqueous solution was 35 wt.%) was entirely introduced into a jet loop reactor (volume 1000 L) in one time. Then, ethylene was introduced into the jet loop reactor to perform a continuous reaction, wherein a pressure of the added ethylene was controlled to be 1.2 MPa and a temperature was controlled to be 105 °C. Further, an initiator, i.e., a sodium persulfate aqueous solution (the weight percentage of the sodium persulfate in the sodium persulfate aqueous solution was 20 wt.%), was continuously added to the jet loop reactor, and a feeding rate of the initiator was 4.5 kg/h. After about 4 h, the ethylene pressure was no longer decreased and the reaction was completed, thereby obtaining the intermediate aqueous solution containing sodium diethylphosphinate.

(2) Preparation of a polymer additive

The intermediate aqueous solution containing sodium diethylphosphinate was diluted with water, until a weight percentage of the sodium diethylphosphinate in the intermediate aqueous solution was 24 wt.%. Then, 500 kg of a diluted solution was taken, heated to 40 °C, and dripped into 462.5 kg of an aluminium sulfate octadecahydrate aqueous solution (the weight percentage of the aluminium sulfate octadecahydrate in the aluminium sulfate octadecahydrate aqueous solution was 25 wt.%) with a pH of 3.0-3.1 to perform a metathesis reaction (During the reaction, the pH was 3.0-3.1, and the reaction temperature was maintained at 40 °C). The dripping time was 180 min. After the dropping was completed, a resulting mixture was cooled and filtered in sequence. A resulting filter cake was washed for 3 times with water in an amount of 3 times the weight of the filter cake, and then dried at 120 °C to a constant weight, thereby obtaining the polymer additive.

Example 3

(1) 318 g of a solid, i.e., sodium hypophosphite monohydrate, 500 g of water and 3 g of a sodium persulfate aqueous solution (a weight percentage of sodium persulfate in the sodium persulfate aqueous solution was 20 wt.%) were placed in an autoclave, and air in the autoclave was replaced by nitrogen. Ethylene was introduced into the autoclave through a pressure reducer after being adjusted to a constant pressure of 1.6 MPa. A temperature in the autoclave was increased to 95 °C and then maintained at 95 °C for 4 h. The sodium persulfate aqueous solution was continuously added during the 4-hour heat preservation process. Then, the temperature was further kept at 95 °C for 1 h. Then the autoclave was cooled down and vented to obtain the intermediate aqueous solution containing sodium diethylphosphinate.

(2) The entire intermediate aqueous solution containing sodium diethylphosphinate was diluted with water until a weight percentage of the sodium diethylphosphinate in the intermediate aqueous solution was 20 wt.%, and then cooled to 3 °C. An aluminum sulfate aqueous solution at a temperature of 3°C, which was prepared by 333 g of aluminum sulfate octadecahydrate and 1332 g of water, was dripped under stirring within 2 h. After the aluminum sulfate aqueous solution was completely added, the temperature was increased to 90 °C at a heating rate of 10 °C/h, and kept at 90 °C for 10 minutes. A resulting mixture was filtered. Then, a filter cake was washed for 3 times with water in an amount of 3 times the weight of the filter cake, and then dried to a constant weight, thereby obtaining the polymer additive.

Example 4

The difference between Example 4 and Example 3 was as following: in step (2), the intermediate aqueous solution was diluted until the weight percentage of the sodium diethylphosphinate in the intermediate aqueous solution was 20 wt.%, and then cooled to 3°C; an aluminum sulfate aqueous solution at a temperature of 3°C, which was prepared by 333 g of aluminum sulfate octadecahydrate and 1332 g of water, was dripped under stirring within 2 h; after the aluminum sulfate aqueous solution was completely added, the temperature was increased to 90 °C at a heating rate of 5 °C/h, and kept at 90 °C for 10 minutes; a resulting mixture was filtered; a filter cake was washed for 3 times with water in an amount of 3 times the weight of the filter cake, and dried to a constant weight, thereby obtaining the polymer additive.

Example 5

(1) 396 kg of a hypophosphorous acid aqueous solution (a weight percentage of hypophosphorous acid in the

hypophosphorous acid aqueous solution was 50 wt.%) was added to an autoclave, air in the autoclave was replaced with 0.6 MPa nitrogen for 5 times, and ethylene was introduced into the autoclave until a pressure of the ethylene in the autoclave was 1.0 MPa. The autoclave was heated to 80 °C under stirring and the temperature was kept at 80 °C for 3 h. 40 g of a sodium persulfate aqueous solution (a weight percentage of sodium persulfate in the sodium persulfate aqueous solution was 10 wt.%) was continuously added into the autoclave during the 3-hour heat preservation process. During the heat preservation process, materials in the autoclave was pumped into a liquid inlet of a venturi ejector through a bottom valve of the autoclave by a centrifugal pump, and the ethylene gas in the upper portion of the autoclave was introduced from a gas inlet of the venturi ejector; the gas and liquid phases were fully mixed and introduced into the autoclave after external circulation; fresh ethylene was introduced from the gas inlet of the venturi ejector to supplement those consumed by the reaction, thereby maintaining the pressure in the autoclave stable at 1.0 MPa. After the initiator was added, the autoclave was kept at 80 °C for 1 h, cooled and vented to obtain a diethylphosphinic acid aqueous solution.

(2) A sodium hydroxide aqueous solution prepared by 60 g of sodium hydroxide and 1140 g of water was slowly dripped into an aluminum sulfate aqueous solution prepared by 333 g of aluminum sulfate octadecahydrate and 777 g of water at 15°C within 1.5 h to obtain an aluminum hydroxide gel.

(3) The diethylphosphinic acid aqueous solution was diluted until a weight percentage of diethylphosphinic acid in the diethylphosphinic acid aqueous solution was 25 wt.%, and then 1464 g of a diluted solution was dripped into the aluminum hydroxide gel obtained in step (2) within 2 h. The temperature was increased to 115 °C at a heating rate of 20 °C/h, and kept at 115 °C for 1 h. A resulting mixture was filtered. Then, a filter cake was washed for 3 times with water in an amount of 3 times the weight of the filter cake, and then dried to a constant weight, thereby obtaining the polymer additive.

Example 6

(1) The diethylphosphinic acid aqueous solution obtained in step (1) of Example 5 was taken.

(2) At 15 °C, a sodium hydroxide aqueous solution prepared by 60 g of sodium hydroxide and 1140 g of water was slowly dripped into an aluminum sulfate aqueous solution prepared by 333 g of aluminum sulfate octadecahydrate and 777 g of water within 1.5 h to obtain an aluminum hydroxide gel.

(3) 1464 g of the diethylphosphinic acid aqueous solution obtained in Example 5 (the weight percentage of diethylphosphinic acid in the diethylphosphinic acid aqueous solution was 25 wt.%) was dripped into the aluminum hydroxide gel within 2 h. Then, the temperature was increased to 115 °C at a heating rate of 5 °C/h, and kept at 115 °C for 1 h. A resulting mixture was filtered. Then, a filter cake was washed for 3 times with water in an amount of 3 times the weight of the filter cake, and dried to a constant weight, thereby obtaining the polymer additive.

Comparative Example 1

An existing polymer additive 1, BEP-22E, purchased from Zhuhai Kingfa Biomaterial Co., Ltd. was adopted.

Comparative Example 2

An existing polymer additive 2, Exolit OP 1230, purchased from Clariant AG, was adopted.

Testing Example

The polymer additives prepared in Examples 1-6 (E1-E6) and adopted in Comparative Examples 1-2 (CE1-CE2) were subjected to phosphorus nuclear magnetic resonance spectroscopy (P-31 NMR), and specific testing contents were as follows.

(1) Instrument: Nuclear magnetic resonance spectrometer (Bruker 400M).

(2) Reagent: 10 wt.% deuterated sulfuric acid aqueous solution.

(3) Experimental method: weighing about 0.1000 g (with an accuracy of 0.0001g) of a sample to be tested, adding the sample to be tested into 5g of the 10 wt% deuterated sulfuric acid aqueous solution, and dissolving the sample to be tested by ultrasound to obtain a mixture; transferring the mixture to a nuclear magnetic tube, and then placing the nuclear magnetic tube in the nuclear magnetic resonance spectrometer, scanning the nuclear magnetic tube to obtain a nuclear magnetic resonance spectrum; integrating peaks of the aluminum diethylphosphinate and aluminum ethylbutylphosphinate in the nuclear magnetic resonance spectrum to obtain a molar percentage of the two, finally

obtaining a weight percentage of the two after conversion.

Testing results of the polymer additives in percentages by weight were shown in Table 1 below.

Table 1

| Component | Example 1 | Example 2 | Example 3 | Example 4 | Example 5 | Example 6 | Comparative Example 1 | Comparative Example 2 |
|---|---|---|---|---|---|---|---|---|
| Aluminum diethylphosphinate | 97.8% | 98.9% | 97.2% | 97.2% | 98.8% | 98.8% | 99.6% | 97.8% |
| Aluminum ethylbutylphosphinate | 2.2% | 1.1% | 2.8% | 2.8% | 1.2% | 1.2% | 0.4% | 2.2% |

(2) The polymer additives in the above-mentioned examples and comparative examples were tested by the following method.

Differential scanning calorimetry (DSC) analysis:

A differential Scanning Calorimeter, NETZSCH DSC 204 F1, was used for testing. A testing amount of each polymer additive was 10 mg. The polymer additives prepared in the examples and the polymer additives of the comparative examples were each heated from room temperature to a maximum temperature of 300 °C at a heating rate of 20 °C/min. After staying at 300 °C for 3 minutes, these polymer additives were each cooled to room temperature at a rate of 20 °C/min to obtain their corresponding cooling curves. After the above-mentioned polymer additives were kept at room temperature for 3 minutes, they were each reheated to a maximum temperature of 300 °C at a heating rate of 20 °C/min to obtain their corresponding second heating curves.

For each polymer additive, an onset temperature and an endset temperature of an exothermic peak were defined on its cooling curve, and a peak area under the exothermic peak formed between the onset temperature and the endset temperature of the exothermic peak was calculated and expressed as $H_1$ (crystallization enthalpy), and a peak temperature of the exothermic peak is $T_1$; further, an onset temperature and an endset temperature of an endothermic peak were defined on the second heating curve of the polymer additive, and a peak area under the endothermic peak formed between the onset temperature and the endset temperature of the endothermic peak was calculated and expressed as $H_2$ (defined as a crystal transformation enthalpy); a peak temperature of the endothermic peak was $T_2$. Then, a dual enthalpy ratio, ΔH, was defined by the following equation, $\Delta H = H_2/H_1$.

The above peak temperatures and peak areas were obtained by calibration or calculation of the software provided in NETZSCH DSC 204 F1.

Testing results were shown in Table 2 below.

Table 2

| | $H_1$ | $H_2$ | ΔH | $T_1$ | $T_2$ |
|---|---|---|---|---|---|
| Example 1 | 21.40 | 20.12 | 0.94 | 145 | 177 |
| Example 2 | 23.83 | 22.11 | 0.93 | 146 | 178 |
| Example 3 | 19.28 | 19.09 | 0.99 | 132 | 170 |
| Example 4 | 22.05 | 23.25 | 1.05 | 137 | 174 |
| Example 5 | 20.12 | 20.52 | 1.02 | 153 | 183 |
| Example 6 | 21.73 | 21.08 | 0.97 | 147 | 179 |
| Comparative Example 1 | 20.67 | 22.32 | 1.08 | 141 | 179 |
| Comparative Example 2 | 22.19 | 19.75 | 0.89 | 145 | 174 |

(3) The polymer additives of the above Examples 1-6 (E1-E6) and Comparative Examples 1-2 (CE1-CE2) were each combined with a synergist, melamine polyphosphate (MPP), to serve as flame retardants. These flame retardants were respectively mixed with glass fibers and base resins for extrusion to prepare composite materials. The amounts of various components in Examples 7-13 (E7-E13) and Comparative Examples 3-5 (CE3-CE5) were shown in Table 3.

Corrosion performance test: Corrosion to a metal block during the preparation processes of the various composite materials prepared in the above Examples 7-13 and in the Comparative Examples 3-5 by blending and extrusion was tested, and specific steps were as following: A 20mm×5mm×2mm 304L stainless steel metal block (00Cr19Ni11) was arranged (a groove having the same size as the metal block was dug at the internal bottom of the die head, and the metal block was embedded in the groove) on a die head of a twin-screw extruder with a screw diameter of 20 mm and a length-to-diameter ratio of 33:1. An injection temperature was 270 °C, and high-temperature materials were in contact with the metal block at the die head. After 50kg of materials were granulated (with a feeding rate of 5 kg/h), metal loss (in percentages by weight) was tested. A higher metal loss indicated a greater corrosiveness, which further indicated a worse corrosion resistance. Testing results of the examples and comparative examples were shown in Table 4 below.

Table 3

| | E7 | E8 | E9 | E10 | E11 | E12 | E13 | CE3 | CE4 | CE5 |
|---|---|---|---|---|---|---|---|---|---|---|
| Base resin 1 | 52 | 52 | 52 | 52 | 52 | 52 | / | 52 | 52 | / |

(continued)

| | | E7 | E8 | E9 | E10 | E11 | E12 | E13 | CE3 | CE4 | CE5 |
|---|---|---|---|---|---|---|---|---|---|---|---|
| Base resin 2 | | 8 | 8 | 8 | 8 | 8 | 8 | / | 8 | 8 | / |
| Base resin 3 | | / | / | / | / | / | / | 60 | / | / | 60 |
| Glass fibre | | 25 | 25 | 25 | 25 | 25 | 25 | 25 | 25 | 25 | 25 |
| MPP | | 3 | 3 | 3 | 3 | 3 | 3 | 3 | 3 | 3 | 3 |
| Polymer additive | E1 | 12 | / | / | / | / | / | 12 | / | / | / |
| | E2 | / | 12 | / | / | / | / | / | / | / | / |
| | E3 | / | / | 12 | / | / | / | / | / | / | / |
| | E4 | / | / | / | 12 | / | / | / | / | / | / |
| | E5 | / | / | / | / | 12 | / | / | / | / | / |
| | E6 | / | / | / | / | / | 12 | / | / | / | / |
| | CE1 | / | / | / | / | / | / | / | 12 | / | 12 |
| | CE2 | / | / | / | / | / | / | / | / | 12 | / |

Table 4

| Performance Index | E7 | E8 | E9 | E10 | E11 | E12 | E13 | CE3 | CE4 | CE5 |
|---|---|---|---|---|---|---|---|---|---|---|
| Metal loss | 0.36% | 0.22% | 0.31% | 0.44% | 0.36% | 0.41% | 0.17% | 0.58% | 0.52% | 0.46% |

It can be seen from the data of the examples in Table 4 that the metal block had smaller loss during the co-extrusion process of the composite materials containing the polymer additive of the present disclosure, indicating that the polymer additive was less corrosive to the metal block during the flame retardant modification process when the dual enthalpy ratio ΔH of the polymer additive, T1 and T2 were within specific ranges. During the co-extrusion process of the composite materials containing the polymer additive of the present disclosure, metal loss was less than or equal to 0.44.

It can be seen from the Examples 7-13 and Comparative Example 3-4 that, when the dual enthalpy ratio ΔH of the polymer additive was within a specific range, the composite materials containing the polymer additive of the present disclosure were less corrosive to the metal block during the co-extrusion process, and the polymer additive can significantly reduce the corrosion to metal parts.

The aforementioned examples are merely illustrative and are used to explain some features of the method of the present disclosure. The attached claims are intended to claim a widest possible range that can be imagined, and the examples described herein are demonstrated by the applicant's actual test results. Therefore, the applicant intends that the attached claims are not limited by the selection of examples that illustrate the features of the present disclosure. Certain numerical ranges used in the claims also include sub-ranges therein, and variations within these ranges should also be construed to be covered by the appended claims in any possible case.

## Claims

1. A polymer additive, comprising aluminum diethylphosphinate having a structural formula shown in formula (I) and aluminum ethylbutylphosphinate having a structural formula shown in formula (II);

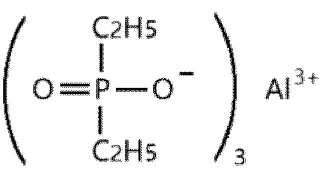

（I）

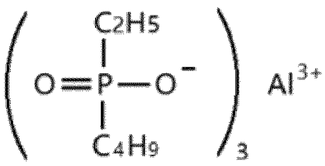

（II）

wherein the polymer additive satisfies a relationship of $0.92 \leq \Delta H \leq 1.06$, and the ΔH is a dual enthalpy ratio and defined by Equation (1); and the polymer additive further satisfies following relationships: $130\ °C \leq T_1 \leq 155\ °C$,

and 165 °C ≤ $T_2$ ≤ 185 °C;

$$\Delta H = H_2/H_1 \qquad (1)$$

the $H_2$, $H_1$, $T_1$, $T_2$ are obtained by differential scanning calorimetry (DSC)comprising the following steps:

in nitrogen atmosphere, heating the polymer additive from room temperature to a maximum temperature of 300 °C at a heating rate of 20 °C/min, holding the maximum temperature for 3 minutes, and then cooling the polymer additive from the maximum temperature to room temperature at a rate of 20 °C/min to obtain a cooling curve of the polymer additive; holding the room temperature for 3 minutes, and then reheating the polymer additive from room temperature to the maximum temperature of 300 °C at a heating rate of 20 °C/min to obtain a second heating curve of the polymer additive;
$H_1$ represents a peak area under an exothermic peak formed between an onset temperature and an endset temperature of the exothermic peak on the cooling curve, and $T_1$ is a peak temperature of the exothermic peak on the cooling curve;
$H_2$ represents a peak area under an endothermic peak formed between an onset temperature and an endset temperature of the endothermic peak on the second heating curve, and $T_2$ is a peak temperature of the endothermic peak on the second heating curve.

**2.** The polymer additive according to claim 1, wherein the polymer additive comprises 97.01 wt.% to 98.99 wt.% of aluminum diethylphosphinate and 1.01 wt.% to 2.99 wt.% of aluminum ethylbutylphosphinate.

**3.** The polymer additive according to claim 1, wherein the polymer additive satisfies the relationship of 0.93 ≤ ΔH ≤ 1.05; the polymer additive also satisfies the following relationships: 132 °C ≤ $T_1$ ≤ 153 °C, and 170 °C ≤ $T_2$ ≤ 183 °C.

**4.** A preparation method of the polymer additive according to any one of claims 1-3, comprising the following steps:

(a) introducing a water-soluble hypophosphite or hypophosphorous acid and an initiator into a jet loop reaction system to react with an olefin, so that 2.00 to 2.05 molecules of olefins are added to each phosphorus atom in the water-soluble hypophosphite or hypophosphorous acid itself, thereby obtaining an intermediate aqueous solution containing a diethylphosphinate;
(b) subjecting the intermediate aqueous solution and a water-soluble aluminum salt to a metathesis reaction to obtain the polymer additive.

**5.** The preparation method according to claim 4, wherein in step (a), a pressure of the olefin in the jet loop reaction system is in a range of from 0.3 MPa to 3.0 MPa; and/or

in step (a), a reaction temperature in the jet loop reaction system is in a range of from 70 °C to 150 °C; and/or
in step (b), a weight percentage of the diethylphosphinate in the intermediate aqueous solution is in a range of from 20 wt.% to 25 wt.%; and/or
in step (b), a weight percentage of the water-soluble aluminum salt in a water-soluble aluminum salt solution is in a range of from 20 wt.% to 25 wt.%; and/or
in step (b), a pH of the metathesis reaction is in a range of from 3.0 to 3.1; a temperature of the metathesis reaction is in a range of from 40 °C to 45 °C; and/or
in step (b), a molar ratio of the diethylphosphinate to an aluminum ion in the water-soluble aluminum salt is 3: (1-1.01).

**6.** A preparation method of the polymer additive according to any one of claims 1-3, comprising the following steps:

(a) under nitrogen protection, allowing a water-soluble hypophosphite or hypophosphorous acid to react with an olefin in the presence of an initiator at a temperature of 90 °C to 100 °C and holding the temperature, so that 2.00 to 2.05 molecules of olefins are added to each phosphorus atom in the water-soluble hypophosphite or hypophosphorous acid itself, thereby obtaining an intermediate aqueous solution containing a diethylphosphinate;
(b) under stirring, mixing the intermediate aqueous solution with a water-soluble aluminum salt to perform a reaction at a temperature of less than or equal to 15 °C, then raising the temperature to 70-95 °C and holding the temperature to obtain a polymer additive.

**7.** A preparation method of the polymer additive according to any one of claims 1-3, comprising the following steps:

(a) under nitrogen protection, allowing a hypophosphorous acid to react with an olefin in the presence of an initiator at a temperature of 90 °C to 100 °C and holding the temperature, so that 2.00 to 2.05 molecules of olefins are added to each phosphorus atom in the hypophosphorous acid itself, thereby obtaining an intermediate aqueous solution containing a diethylphosphinic acid;
(b) preparing an aluminum hydroxide gel;
(c) dripping the intermediate aqueous solution into the aluminum hydroxide gel for reaction, raising the temperature to 90-120 °C, holding the temperature for 0.1-5 h, thereby obtaining the polymer additive.

**8.** A use of the polymer additive according to any one of claims 1-3 in reducing corrosion to metal production equipment.

**9.** A use of the polymer additive according to any one of claims 1-3 as a reactive or non-reactive flame retardant for at least one selected from the group consisting of a polymer, a varnish, a foaming coatings, wood and other cellulose-containing products; or a use of the polymer additive in preparation of a flame-retardant polymer molding material or a flame-retardant polymer molding; or a use of the polymer additive for imparting flame retardancy to a polyester fabric, and/or a pure cellulose fabric, and/or a blended cellulose fabric by impregnation.

**10.** The use according to claim 9, wherein the polymer additive is used together with a synergist; the synergist is one or more selected from the group consisting of melamine phosphate, di(melamine) phosphate, penta(melamine) triphosphate, tri(melamine) diphosphate, tetra(melamine) triphosphate, hexa(melamine) pentaphosphate, melamine diphosphate, melamine tetraphosphate, melamine pyrophosphate, melamine polyphosphate, melam polyphosphate, melem polyphosphate, and melon polyphosphate; or, the synergist is a melamine condensation product, such as melam, melem, and/or melon; or, the synergist is one or more selected from the group consisting of an oligoester of tris(2-hydroxyethyl) isocyanurate and aromatic polycarboxylic acid, benzoguanamine, tris(2-hydroxyethyl) isocyanurate, allantoin, glycoluril, melamine, melamine cyanurate, urea cyanurate, dicyandiamide, and guanidine; or, the synergist is a nitrogen-containing phosphate having a formula of $(NH_4)_yH3\text{-}yPO_4$ or $(NH_4PO_3)_z$, wherein y is 1-3 and z is 1-10000; or, the synergist is aluminum phosphite, and/or aluminum pyrophosphite; or, the synergist is one or more selected from the group consisting of zinc borate, zinc carbonate, zinc stannate, basic zinc stannate, zinc phosphate, zinc oxide, zinc hydroxide, tin oxide hydrate, basic zinc silicate, magnesium hydroxide, hydrotalcite, and magnesium carbonate; or, the synergist is one or more selected from the group consisting of ethylphosphonate, butylphosphonate, n-butylphosphonate, sec-butylphosphonate, and hexylphosphonate.

**11.** The use according to claim 9 or claim 10, wherein the polymer additive is used together with another additive, wherein the another additive is at least one selected from the group consisting of an antioxidant, an UV stabilizer, a gamma ray stabilizer, a hydrolysis stabilizer, an antistatic agent, an emulsifier, a nucleating agent, a softener, a processing aid, an impact modifier, a dye, and a pigment.

**12.** The use according to claim 11, wherein 0.0001 wt.% - 99.7999 wt.% of the polymer additive, 0.1 wt.% - 40 wt.% of the synergist and 0.1 wt.% - 40 wt. % of the another additive are used.

**13.** A flame retardant thermoplastic or thermosetting polymer composite material, comprising: 0.5-45 wt.% of the polymer additive according to any one of claims 1-3, 0.5 wt.% - 95 wt.% of a thermoplastic or thermosetting polymer or a mixture thereof, 0 - 55 wt.% of a synergist, and 0 - 55 wt.% of a filler or a reinforced material;

**14.** The flame retardant thermoplastic or thermosetting polymer composite material according to claim 13, wherein the thermoplastic or thermosetting polymer is one or more selected from a polyester, a polyamide, a thermoplastic elastomer, a thermoplastic polyurethane, a thermoplastic polyester elastomer, a styrenic polymer, a polyketone, a polyolefin, and a polyacrylate.

Europäisches Patentamt
European Patent Office
Office européen des brevets

# EUROPEAN SEARCH REPORT

Application Number
EP 25 20 2323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 544 205 A1 (CLARIANT GMBH [DE]) 22 June 2005 (2005-06-22) * abstract; claims 1,8,11,26,51,52,54-60; examples 2,4,7 * ----- | 1-7,9-14 | INV. C08K5/00 C08K5/52 C08K5/5313 |
| X | EP 3 505 596 A1 (CLARIANT INT LTD [CH]) 3 July 2019 (2019-07-03) * abstract; claims 1, 7-11; example 1 * ----- | 1-7,9-14 | |
| A,P | CN 119 307 007 B (SHANGHAI KINGFA SCI & TECH CO; KINGFA SCIENCE & TECHNOLOGY CO ET AL.) 11 July 2025 (2025-07-11) * the whole document * ----- | 1-14 | |
| | | | TECHNICAL FIELDS SEARCHED (IPC) |
| | | | C08K |

The present search report has been drawn up for all claims

1

| Place of search | Date of completion of the search | Examiner |
|---|---|---|
| Munich | 6 February 2026 | Schütte, Maya |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 2323

This annex lists the patent family members relating to the patent documents cited in the above-mentioned European search report. The members are as contained in the European Patent Office EDP file on
The European Patent Office is in no way liable for these particulars which are merely given for the purpose of information.

06-02-2026

| Patent document cited in search report | Publication date | Patent family member(s) | Publication date |
|---|---|---|---|
| EP 1544205 A1 | 22-06-2005 | AT E397613 T1 | 15-06-2008 |
| | | CN 1660858 A | 31-08-2005 |
| | | DE 10359815 A1 | 28-07-2005 |
| | | EP 1544205 A1 | 22-06-2005 |
| | | EP 1958950 A1 | 20-08-2008 |
| | | ES 2308094 T3 | 01-12-2008 |
| | | HK 1080864 A1 | 04-05-2006 |
| | | JP 4926399 B2 | 09-05-2012 |
| | | JP 2005179362 A | 07-07-2005 |
| | | JP 2011006436 A | 13-01-2011 |
| | | US 2005137418 A1 | 23-06-2005 |
| EP 3505596 A1 | 03-07-2019 | CN 105940085 A | 14-09-2016 |
| | | CN 109796628 A | 24-05-2019 |
| | | CN 109810291 A | 28-05-2019 |
| | | CN 109824939 A | 31-05-2019 |
| | | CN 109824940 A | 31-05-2019 |
| | | DE 102014001222 A1 | 30-07-2015 |
| | | EP 3099760 A1 | 07-12-2016 |
| | | EP 3505596 A1 | 03-07-2019 |
| | | EP 3505597 A1 | 03-07-2019 |
| | | EP 3505598 A1 | 03-07-2019 |
| | | EP 3505599 A1 | 03-07-2019 |
| | | EP 3521402 A1 | 07-08-2019 |
| | | ES 2914882 T3 | 17-06-2022 |
| | | JP 6630278 B2 | 15-01-2020 |
| | | JP 2017508832 A | 30-03-2017 |
| | | KR 20160114160 A | 04-10-2016 |
| | | PL 3505596 T3 | 19-09-2022 |
| | | PL 3505597 T3 | 09-01-2023 |
| | | PL 3521402 T3 | 02-01-2023 |
| | | US 2016340588 A1 | 24-11-2016 |
| | | WO 2015113740 A1 | 06-08-2015 |
| CN 119307007 B | 11-07-2025 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 107189098 A
- CN 110407869 A